Europäisches Patentamt

(19) European Patent Office

Office européen des brevets

(11) Numéro de publication : **0 128 838**
**B1**

(12) **FASCICULE DE BREVET EUROPÉEN**

(45) Date de publication du fascicule du brevet :
**09.08.89**

(51) Int. Cl.⁴ : **G 01 F   3/22**

(21) Numéro de dépôt : **84401196.5**

(22) Date de dépôt : **13.06.84**

(54) **Compteur à gaz.**

**Demande divisionnaire 87117874 déposée le 03.12.87.**

(30) Priorité : **14.06.83 FR 8309791**

(43) Date de publication de la demande :
**19.12.84 Bulletin 84/51**

(45) Mention de la délivrance du brevet :
**09.08.89 Bulletin 89/32**

(84) Etats contractants désignés :
**AT BE DE GB IT NL SE**

(56) Documents cités :
**EP—A— 0 081 641**
**DE—A— 2 756 163**
**FR—A—   539 446**
**FR—A— 1 112 391**
**FR—A— 1 122 023**
**FR—A— 1 466 742**
**GB—A—   857 663**
**GB—A—   934 170**
**GB—A— 1 241 796**
**US—A— 3 872 724**
**US—A— 4 014 212**

(73) Titulaire : **SCHLUMBERGER INDUSTRIES**
**50, avenue Jean Jaurès**
**F-92120 Montrouge (FR)**

(72) Inventeur : **Carte, Michel**
**53, rue de Chevigné**
**F-51100 Reims (FR)**
Inventeur : **Benadassi, Michel**
**25, rue du Maréchal Leclerc Orainville**
**F-02190 Guignicourt (FR)**
Inventeur : **Dumay, Michel**
**69, rue de Sachs**
**F-51140 Jonchery Sur Vesle (FR)**

(74) Mandataire : **Dronne, Guy**
**SCHLUMBERGER INDUSTRIES Centre de Recherches/SMR BP 620-05**
**F-92542 Montrouge Cédex (FR)**

## Description

La présente invention concerne un compteur à gaz.

De façon plus précise l'invention concerne un compteur à gaz du type à soufflets.

Ces compteurs sont bien connus et le brevet britannique 1 508 307 en décrit un exemple de réalisation. Il consiste essentiellement en deux espaces de mesure, chaque espace étant séparé en deux chambres de mesure par un soufflet déformable. Chaque chambre de mesure comporte un orifice pour l'admission puis l'évacuation du volume de gaz à mesurer.

Pour synchroniser l'admission et l'évacuation du gaz dans les chambres avec la position des soufflets chaque soufflet est associé à un système de transmission qui commande un distributeur venant mettre cycliquement les orifices associés aux chambres en communication avec l'arrivée de gaz dans le compteur ou avec la sortie de gaz.

Le distributeur peut être du type à déplacement linéaire ou à déplacement rotatif. Dans ce deuxième cas, les orifices associés aux chambres sont disposés sur une couronne circulaire et le distributeur tourne autour de l'axe de cette couronne. On connaît par les brevets FR-A-1112391 et US-A-4014212 de tels compteurs dans lesquels le distributeur est relié aux soufflets par un système à manivelle et leviers.

Le distributeur glisse sur une glace dans laquelle sont ménagés les orifices, et l'étanchéité entre le distributeur et la glace est assurée par le seul poids du distributeur et par la différence de pression du gaz dans le distributeur et à l'extérieur de celui-ci du fait des pertes de charge. Pour obtenir une bonne étanchéité, ce qui est une condition nécessaire pour disposer d'un compteur ayant une bonne précision, il est nécessaire que l'usure de la face du distributeur en contact avec la glace soit régulière. Or dans les systèmes connus les moyens d'entraînement du distributeur, introduisent en plus un couple de basculement du distributeur c'est-à-dire que, outre la rotation du distributeur autour d'un axe perpendiculaire à la glace, les moyens d'entraînement appliquent au distributeur un couple qui tend à faire tourner le distributeur autour d'un axe perpendiculaire à son axe de rotation normal. Il en résulte une usure irrégulière de la face d'appui du distributeur qui engendre des fuites, et donc un mauvais fonctionnement du compteur de gaz.

Pour remédier à ces inconvénients un objet principal de l'invention est de fournir un compteur à soufflets du type à distributeur rotatif dans lequel les moyens d'entraînement en rotation du distributeur n'introduisent pas de couple de basculement de celui-ci.

Pour atteindre ce but, le compteur qui comprend une unité de mesure comportant une caisse formant deux compartiments de mesure, chaque compartiment étant séparé par un soufflet déformable en deux chambres et une surface de distribution dans laquelle sont ménagés quatre orifices, chaque orifice étant relié à une desdites chambres par des passages internes, un distributeur monté à rotation sur ladite surface de distribution, et des moyens de transmission pour relier cinématiquement ledit distributeur aux dits soufflets, lesdits moyens de transmission comprenant au moins deux ensembles de leviers, lesdits moyens de transmission comprenant en outre, une pièce formant manivelle comportant un moyeu monté pivotant par rapport à ladite caisse et un premier axe de pivotement parallèle audit moyeu, caractérisé en ce que ledit distributeur comprend un fourreau cylindrique disposé perpendiculairement à ladite surface de distribution selon l'axe de rotation dudit distributeur, en ce que le moyeu de ladite manivelle est engagé avec jeu dans ledit fourreau, et en ce que l'axe de pivotement de ladite manivelle est décalé par rapport au dit moyeu, une extrémité desdits ensembles de leviers étant montée sur ledit premier axe de pivotement, et ladite manivelle comportant en outre des moyens pour solidariser en rotation ladite pièce formant manivelle et ledit distributeur.

Ainsi, grâce au jeu existant entre le moyeu et le fourreau du distributeur, le couple de basculement qui risque d'être appliqué à la manivelle par les ensembles de leviers n'est pas transmis au distributeur lui-même.

Dans les compteurs à gaz à quatre chambres, par exemple celui qui est décrit dans le brevet britannique 1 508 307, la caisse du compteur est constituée par un bloc central et par deux couvercles latéraux. La périphérie de chacun des deux soufflets est pincée entre un bord du bloc central et le bord d'un des couvercles latéraux. En outre, dans certains compteurs de ce type, tels que ceux décrits dans les brevets DE-A-2756163 et FR-B-1466742, le bloc central (par exemple en matière synthétique) comporte les éléments de structure pour définir les passages internes associés aux deux chambres internes (celles qui sont définies par le bloc central), tandis qu'une partie des éléments de structure définissant les passages internes associés aux deux chambres externes (celles qui sont définies par les deux couvercles latéraux), fait partie intégrante des deux couvercles latéraux.

Une telle disposition de la caisse du compteur est d'un montage délicat qui ne permet pas un assemblage à l'aide de moyens automatiques et soulève en outre des difficultés pour ce qui est de l'étanchéité entre le bloc central et les couvercles.

Un autre objet de l'invention est donc de fournir un compteur à gaz à quatre chambres dont la caisse présente une structure particulière pour en faciliter l'assemblage, et en particulier pour en permettre un assemblage par des moyens automatiques lorsque ladite caisse est réalisée avec des matériaux plastique thermo-soudables.

Pour atteindre ce but, le compteur à gaz est remarquable en ce que ladite caisse est formée par un bloc central et par deux couvercles latéraux solidaires dudit bloc central, ledit bloc central comportant tous les éléments de structure définissant lesdits passages internes.

D'autres caractéristiques et avantages de l'invention apparaîtront plus clairement à la lecture de la description qui suit d'un mode de réalisation de l'invention donné à titre d'exemple non limitatif. La description se réfère aux dessins annexés sur lesquels :

La figure 1 est en vue en coupe verticale partielle du compteur selon l'invention ;

La figure 2 est en vue de dessus du compteur, la partie supérieure de l'enveloppe externe étant enlevée ;

La figure 3a est en vue en coupe verticale selon la ligne brisée A-A de la figure 2 ;

La figure 3b est en vue de détail de la figure 3a, montrant plus particulièrement le montage et l'entraînement du distributeur ;

La figure 4 est en vue en coupe partielle verticale selon un plan parallèle à celui de la figure 1 ;

La figure 5, analogue à la figure 4, montre une variante de réalisation de l'introduction et de l'évacuation du gaz dans et hors de l'enveloppe du compteur.

La figure 6a est une vue du bloc central de la caisse du compteur en coupe selon la ligne VI-VI de la figure 2 ;

La figure 6b est une vue du bloc central en coupe selon la ligne B-B de la figure 6a ;

La figure 6c est une vue du bloc central en coupe selon la ligne C-C de la figure 6a ;

La figure 6d est une vue du bloc central en coupe selon la ligne D-D de la figure 6a ;

La figure 6e est une vue de dessus du bloc central de la caisse du compteur ; et

La figure 7 est une vue explosée en perspective illustrant un mode d'assemblage des soufflets et des couvercles latéraux sur le bloc central.

Comme cela est bien connu, le compteur se compose essentiellement d'une enveloppe externe étanche A, d'une unité de mesure B disposée à l'intérieur de l'enveloppe A et d'un totalisateur C qui permet d'afficher de façon mécanique la mesure de volume effectuée par l'unité de mesure B.

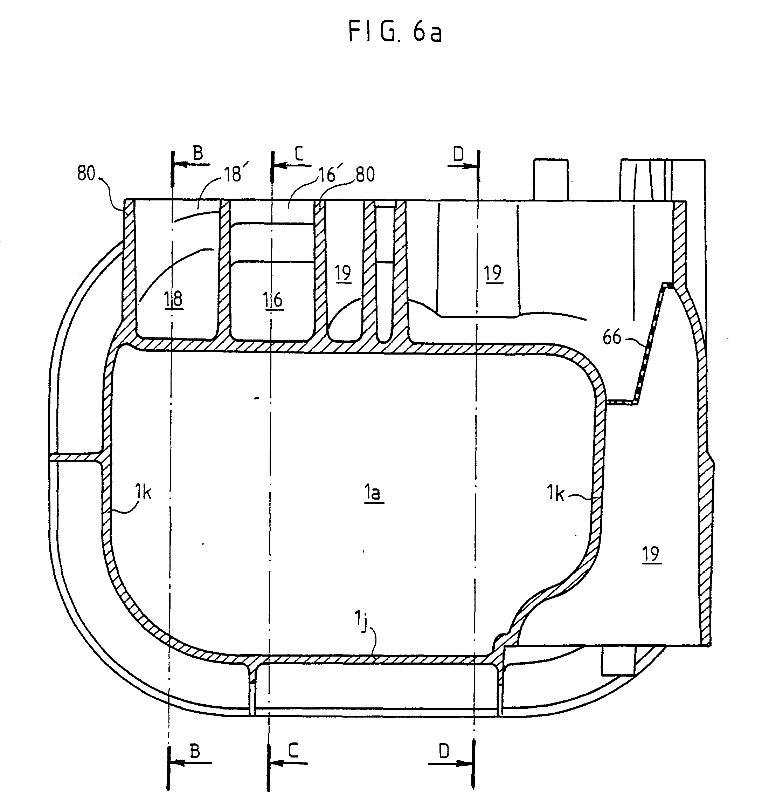

L'unité de mesure B comprend tout d'abord une caisse D qui comporte un bloc central référencé 1 et deux couvercles latéraux respectivement référencés 2 et 3. Comme le montre plus particulièrement les figures 6a à 6d, le bloc central, 1 comprend une cloison centrale la disposée selon le plan principal longitudinal du bloc central par un fond lj sensiblement perpendiculaire à la cloison centrale la, et deux parois latérales référencées 1k. la partie supérieure du bloc central, qui est plus complexe sera décrite ultérieurement. Les couvercles 2 et 3 sont soudés par des surfaces d'accouplement formant le bord du fond lj, des parois latérales lk et de la partie supérieure du bloc central l. Par exemple, on trouve les surfaces d'accouplement lc et ld qui sont soudées avec des surfaces d'accouplement 2a et 3a des couvercles 2 et 3. Cet ensemble constitué par le bloc central et les couvercles latéraux définit deux espaces séparés par la cloison centrale la et respectivement référencés 4 et 5. Ces espaces seront appelés ultérieurement compartiments. Comme cela est bien connu chaque compartiment 4 et 5 est séparé en deux chambres par un soufflet déformable ou diaphragme. Pour le compartiment 4 on trouve le soufflet 10 et pour le compartiment 5 le soufflet 11. Ainsi le compartiment 4 est séparé par le soufflet 10 en une chambre 6 et une chambre 7. Symétriquement le soufflet 11 sépare le compartiment 5 en une chambre 8 et une chambre 9. La périphérie de chaque soufflet est pincée entre des épaulements internes ménagés dans le fond lj, les parois latérales lk ; et la partie supérieure du bloc central 1, respectivement référencés le et lf et des brides respectivement référencées 12 et 13. La caisse D comprend enfin à sa partie supérieure un couvercle de distribution 14 qui est soudé ou collé à la partie supérieure du bloc central 1 qui sera décrite ultérieurement.

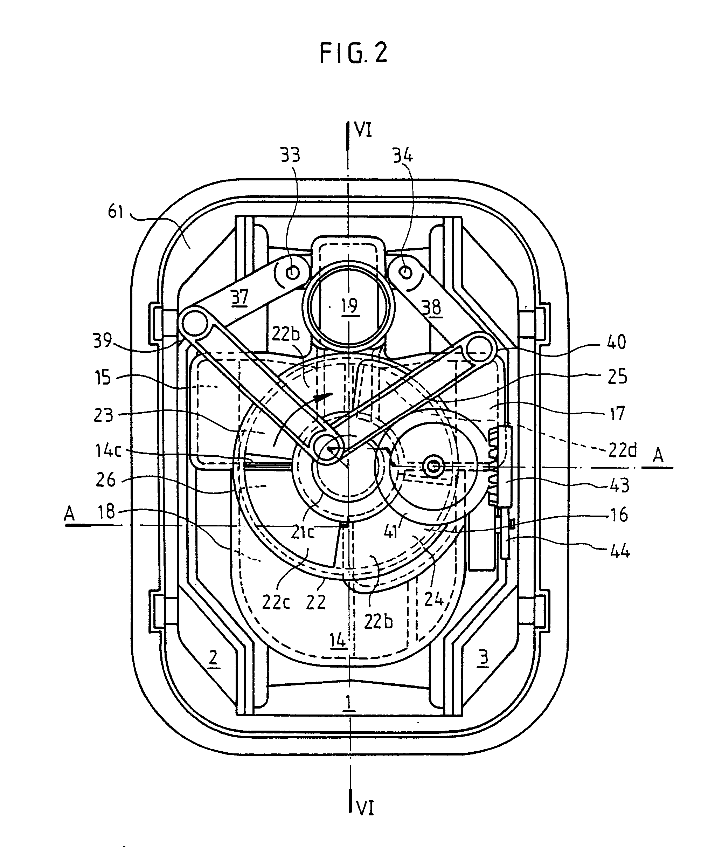

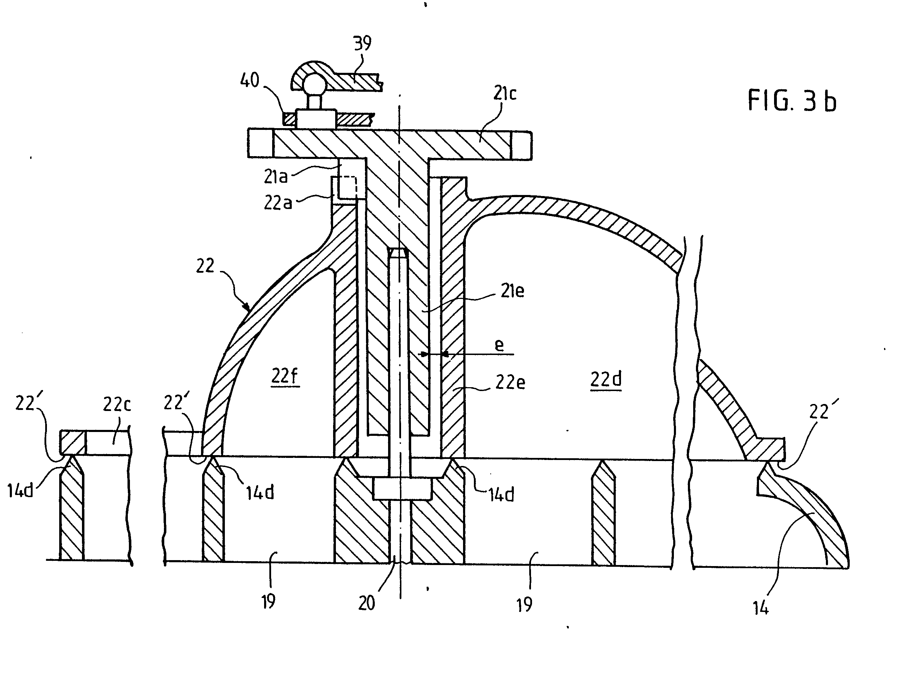

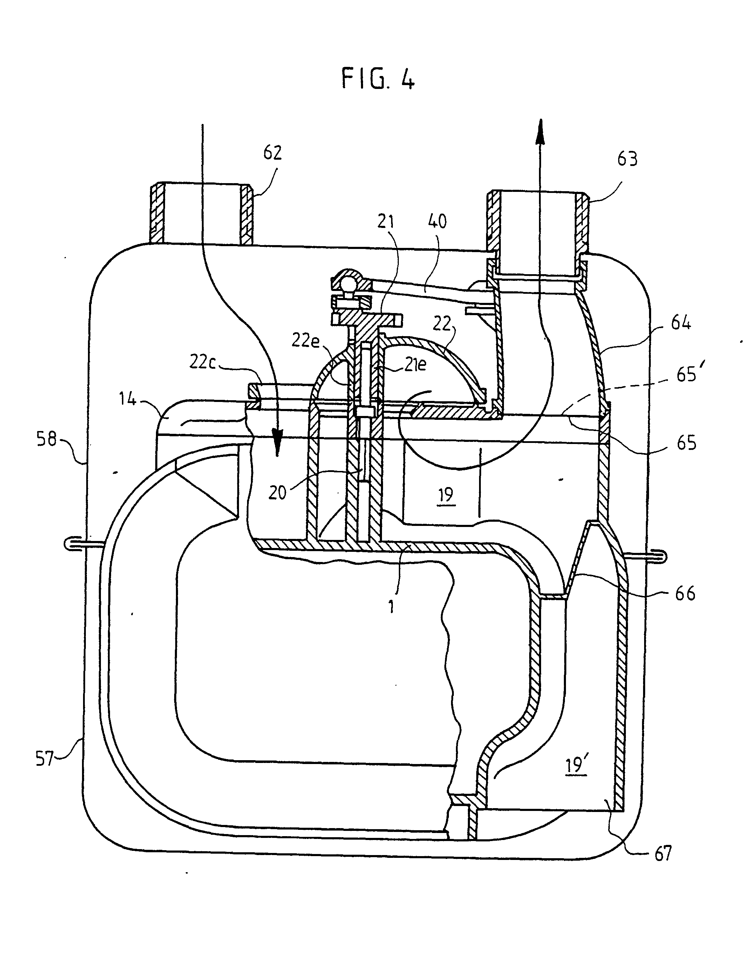

Le couvercle de distribution 14 et la partie supérieure du bloc central 1 définissent en outre des passages internes respectivement référencés 15, 16, 17 et 18. Ces pièces définissent de plus un passage central de sortie 19 mieux visible sur les figures 3b et 4. Comme on le voit sur la figure 2, la face supérieure 14b du couvercle de distribution 14 comporte quatre ouvertures ou lumières ayant chacune la forme d'un quart de secteur de cercle qui sont respectivement référencées 23, 24, 25 et 26 séparées par des barrettes radiales d'étanchéité 14c. La face supérieure 14b forme un siège ou glace dans lequel sont ménagées les 4 lumières déjà définies. Les passages internes 15 à 18 ont pour but de relier chaque chambre 6 à 9 avec une des lumières 23 à 26. Plus précisément, les chambres 6, 7, 8 et 9 sont mises en communication avec les lumières 23, 24, 25 et 26, respectivement par les passages internes 15, 16, 17 et 18.

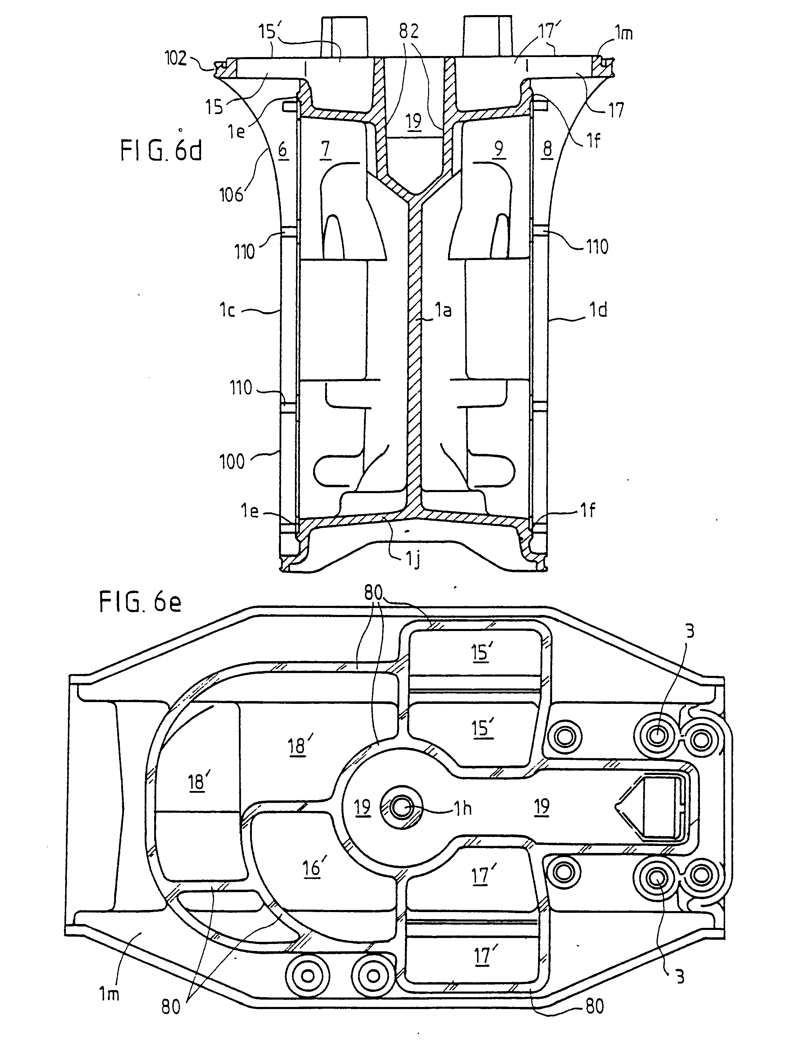

En se référant plus particulièrement aux figures 6a à 6e on comprendra mieux comment sont définis les passages 15 à 18. La figure 6e montre que la partie supérieure du bloc central 1 comprend une paroi supérieure lm dans laquelle débouchent des orifices séparés par des éléments de cloison parallèles à la cloison centrale la et qui portent la référence générale 80. C'est sur l'extrémité supérieure libre des éléments de cloison 80 qu'est fixé le couvercle de distribution 14. Les orifices forment l'extrémité des passages 15 à 19. Sur la figure 6e on a repéré ces orifices par la référence du passage dont ils forment l'extrémité, mais affectée du signe prime. Le couvercle de distribution 14 a pour fonction de relier de façon étanche les orifices 15' à 18' aux lumières 23 à 26.

La figure 6d montre que le passage interne 17 se réduit à un trou, également référencé 17, percé dans la paroi supérieure lm du bloc central qui fait directement communiquer la chambre 8 avec l'orifice 17' et que le passage interne 15 se réduit à un trou, également référencé 15, percé dans la paroi supérieure lm du bloc central et qui fait directement communiquer la chambre 6 avec l'orifice 15'. Le passage central 19 est limité par une cloison en forme de U référencée 82 et dont le sommet est raccordé à la périphérie supérieure de la cloison centrale du moins sur une partie de la longueur de celle-ci, comme le montre la figure 6a.

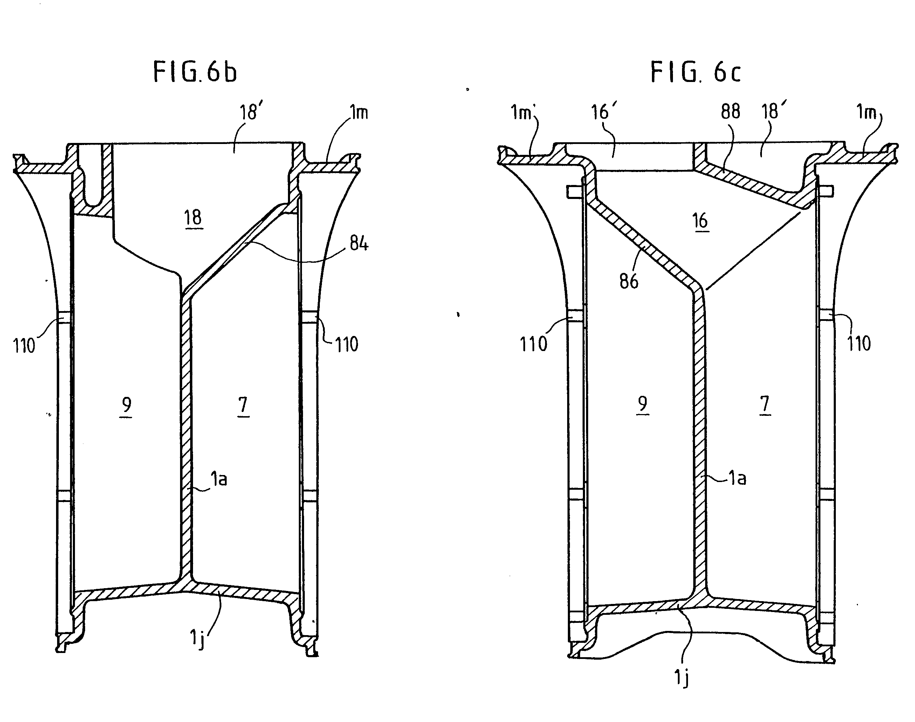

La figure 6b montre que le passage 18 qui fait communiquer la chambre 9 avec l'orifice 18' de la figure 6e est limité par une cloison inclinée 84 raccordée aux éléments de cloison de la figure 6e entourant l'orifice 18'.

La figure 6c montre que le passage interne 16 qui relie la chambre 7 à l'orifice 16' de la figure 6e est limité par une première cloison inclinée 86 qui s'étend de la périphérie de la cloison centrale la à un des éléments de cloison entourant l'orifice 16', par une deuxième cloison inclinée 88 séparant le passage 16 d'une partie de l'orifice 18' et par les éléments de cloison de la figure 6e entourant l'orifice 16'.

La description précédente faite en liaison avec les figures 6a à 6e montre que, selon une caractéristique importante de l'invention, la totalité des passages internes 15 à 18, ainsi que le passage central 19 sont définis par des éléments de structure appartenant au bloc central 1. Le couvercle de distribution 14 a simplement pour fonction de relier les orifices 15' à 18' du bloc central aux lumières de dstribution 23 à 26. Ainsi les couvercles latéraux 2 et 3 ne comportent aucun élément de définition des passages internes.

L'unité de mesure comprend également un distributeur rotatif portant la référence générale 22. La face inférieure 22' du distributeur 22 glisse sur le siège ou glace formé par la face supérieure 14b du couvercle de distribution 14. Plus précisément la face 14b est munie de barrettes ou nervures 14d, mieux visibles sur la figure 3b, qui coopèrent avec la face inférieure 22' du distributeur pour assurer les étanchéités nécessaires. Le distributeur est constitué par quatre secteurs de cercle qui constituent respectivement en un orifice 22c et en une zone bombée 22d séparés par deux zones planes 22b. Chacune de ces quatre zones correspond à un angle de 90°. Le distributeur comporte également une zone centrale évidée 22f qui communique avec la zone bombée creuse 22d. On comprend aisément que l'orifice 22c a pour but de mettre successivement chaque lumière en communication avec l'extérieur de l'unité centrale limité par l'enveloppe A, que la zone bombée 22d et la zone centrale 22f ont pour but de mettre en communication le passage central 19 avec une des lumières tout en isolant l'ensemble vis-à-vis de l'extérieur de l'unité de mesure et que les zones planes 22b obturent successivement les lumières.

Comme cela est bien connu, la rotation du distributeur permet de commander l'admission et l'évacuation du gaz dans les différentes chambres de mesure.

Les compteurs à quatre chambres et à distributeur rotatif sont bien connus en eux-mêmes, par exemple par le brevet américain N° 3 161 049. Il est donc inutile de décrire ici les détails de fonctionnement d'un tel compteur, c'est-à-dire les relations entre la position du distributeur rotatif et la position des soufflets dans les compartiments de mesure. Il suffira de se reporter au document cité ci-dessus.

Comme le montre plus en détail la figure 3b, pour assurer la synchronisation entre le mouvement des soufflets et la rotation du distributeur 22, on trouve tout d'abord une pièce 21 formant manivelle. La manivelle 21 comporte un moyeu 21e muni d'un trou borgne monté à pivotement sur un axe fixe 20 engagé dans un alésage axial 1h ménagé dans le bloc central. La manivelle peut ainsi tourner autour de l'axe 20 qui est disposé selon l'axe géométrique des lumières 23 à 26. Le moyeu de la manivelle est également engagé dans un fourreau 22e solidaire du distributeur 22. Le fourreau 22e est disposé selon l'axe géométrique de la face circulaire du distributeur 22 en contact avec la face 14b du couvercle de distribution. Le moyeu 21e est engagé librement avec un très léger jeu e (exagéré sur la figure 2b), par exemple de 1/10e de millimètre, dans le fourreau 22e. L'étanchéité est assurée par une des barrettes 14d qui est circulaire, ménagée dans le couvercle de distribution 14 et qui coopère avec l'extrémité inférieure du fourreau 22e. La manivelle 21 comporte également une roue dentée 21c qui entraîne le totalisateur C comme on l'expliquera ultérieurement ainsi qu'un maneton 21b excentré par rapport à l'axe du moyeu 21c. Enfin la manivelle 21 et le distributeur 22 sont solidarisés en rotation par la coopération d'un ergot 21a ménagé dans la manivelle 21 et d'une rainure radiale 22a ménagée dans le distributeur 22.

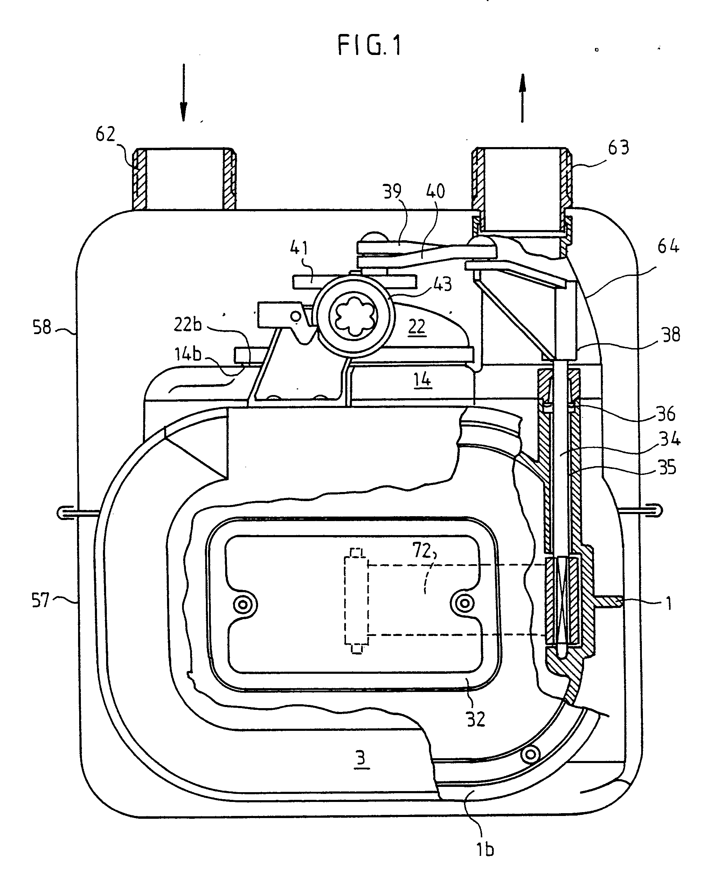

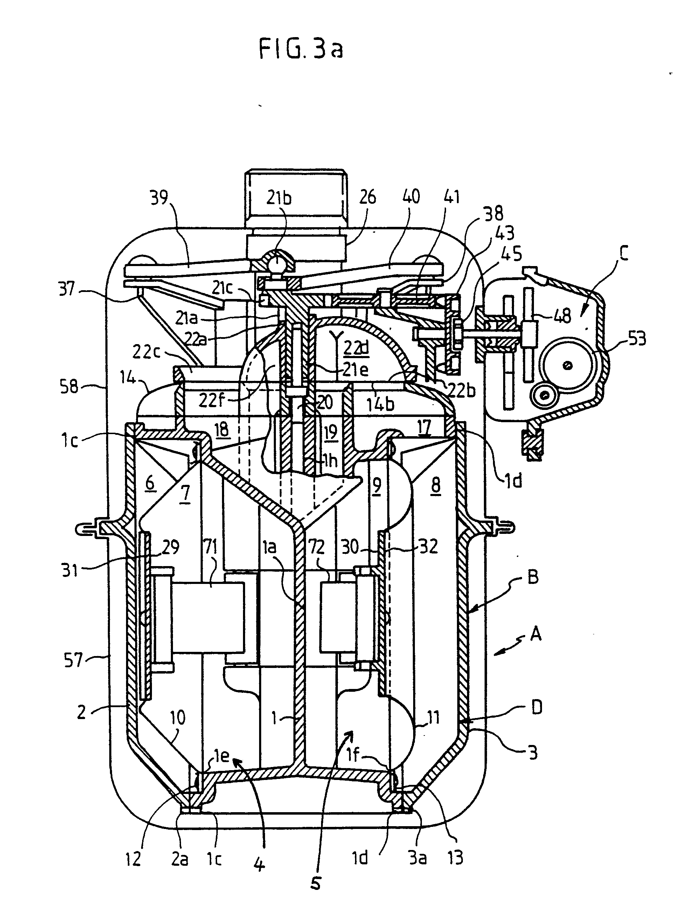

Si l'on revient aux soufflets 10 et 11 représentés plus particulièrement sur la figure 3a, on voit que ceux-ci sont pincés dans leur partie centrale respectivement entre des plaques 29 et 30 et des contre-plaques 31 et 32. Des bras respectivement 71 et 72 sont reliés à pivotement respectivement au centre des plaques 29 et 30. Comme on le voit mieux sur la figure 1 l'autre extrémité des bras 71 et 72 est fixée solidaire en rotation à l'extrémité inférieure d'arbres verticaux respectivement référencés 33 et 34. Les arbres 33 et 34 sont montés pivotant dans des passages 35 ménagés dans le bloc central 1. Les arbres 33 et 34 traversent la pièce 1 de façon étanche grâce au joint d'étanchéité 36.

L'extrémité supérieure des arbres 33 et 34 est respectivement solidaire en rotation de premiers leviers respectivement référencés 37 et 38. Les positions moyennes de ces leviers forment entre elles un angle caractéristique de 90° et la longueur de ces leviers est telle que les droites passant par le point extrême des arcs engendrés par la rotation desdits leviers se coupent sur l'axe de rotation du distributeur 22 tout en formant un angle caractéristique de 90°. Cette disposition permet de n'utiliser qu'une seule manivelle simple. Les leviers 37 et 38 sont reliés par leur seconde extrémité à des tiges de connexion respectivement référencées 39 et 40. Ces tiges de connexion sont montées sur le maneton 21b.

On comprend aisément, à partir de la description précédente, que les déplacements des soufflets 10 et 11 entraînent des rotations correspondantes des arbres 33 et 34. La rotation de ces arbres entraîne à son tour une rotation correspondante du distributeur 22 par l'intermédiaire des ensembles de leviers 37/39 et 38/40. Ainsi on. commande l'admission ou l'évacuation des chambres 6 à 9 en synchronisme avec le déplacement des soufflets. De plus, avec un tel système d'entraînement il est possible de prévoir une certaine avance à l'admission, c'est-à-dire qu'on autorise l'introduction du gaz dans une chambre avant que le soufflet ne soit en fin de course sans qu'il soit nécessaire d'avoir recours à un système de butées.

Cela permet de définir avec une meilleure précision la position extrême du soufflet et donc le volume utile de la chambre.

En se référant à la figure 3a on voit que l'enveloppe externe A est constituée par deux coquilles 57 et 58 respectivement inférieure et supérieure. La coquille supérieure 58 est munie d'une buse d'admission du gaz 62 et d'une buse d'évacuation du gaz 63. La buse d'évacuation 63 est reliée par le conduit 64 au passage interne d'évacuation 19 par l'intermédiaire de l'orifice 65 ménagé dans une zone perforable 65' du couvercle de distribution 14 située à l'extérieur de la surface balayée par le distributeur 22.

Enfin, le totalisateur C visible sur la figure 3a, comprend des tambours 53 d'affichage de la mesure. ces tambours sont reliés cinématiquement à la roue 21c de la manivelle 21 par un ensemble de roues dentées référencées 41, 43, 45 et 48 qu'il n'est pas nécessaire de décrire plus en détail.

En variante, il est possible de prévoir entre le fourreau 22e et le moyeu 21e un jeu e non négligeable, par exemple de l'ordre de 1 mm. Sous l'effet de la rotation de la manivelle 21, le distributeur 22 est entraîné en rotation autour d'un axe variable aléatoirement du fait du jeu e qui n'est plus négligeable. Le mouvement du distributeur est donc excentré par rapport à l'axe de rotation du moyeu 21e.

En conséquence, la surface de contact entre les barrettes 14d du couvercle de distribution et la face inférieure 22' du distributeur 122 varie en même temps que l'axe de rotation du distributeur. Il en résulte que l'usure de la face inférieure 22' du distributeur 22 intéresse une beaucoup plus grande portion de celle-ci, portion qui est définie par le jeu e. Ainsi l'usure de la face 22' du distributeur 22 est beaucoup plus régulière.

Il est important de revenir plus en détail sur le mode particulier d'entraînement en rotation du distributeur 22.

Outre l'entraînement en rotation du distributeur, les ensembles de leviers 37-39 et 38-40 risquent d'appliquer au distributeur un couple de basculement, comme cela a déjà été expliqué. Selon l'invention ce couple de basculement est appliqué à l'ensemble formant manivelle 21. Du fait qu'il existe un certain jeu entre le moyeu 21e de la manivelle et le fourreau 22e du distributeur, et que la seule liaison entre la maivelle 21 et le distributeur 22 est réalisée par la coopération de basculement est appliqué à la manivelle, mais n'est pas transmis au distributeur lui-même. Il en résulte que l'usure de la face du distributeur en contact avec la glace 14b est régulière.

Dans le mode de réalisation décrit et représenté en particulier sur la figure 4, le gaz entre et sort du compteur à la partie supérieure de l'enveloppe A. Selon une caractéristique de l'invention, le compteur est réalisé de telle manière que, moyennant des opérations simples d'usinage et de montage, l'introduction du gaz dans l'enveloppe se fasse toujours à la partie supérieure de l'enveloppe, mais que l'évacuation du gaz se fasse à la partie inférieure de l'enveloppe, sensiblement dans le prolongement de l'introduction. Pour cela, le bloc central 1 et les couvercles latéraux 2 et 3 définissent un passage interne 19' séparé, sur la figure 4, du passage 19 par une cloison mince 66 perforable. Le passage 19' débouche par l'orifice 67 à l'extrémité inférieure de la caisse D.

Pour réaliser le système d'introduction-évacuation de la figure 4 on voit qu'il suffit de percer l'orifice 65 dans la zone 65' du couvercle de distribution 14, de prévoir les buses d'admission 62 et d'évacuation 63 comme cela est représenté sur la figure 4 et de monter le conduit 64.

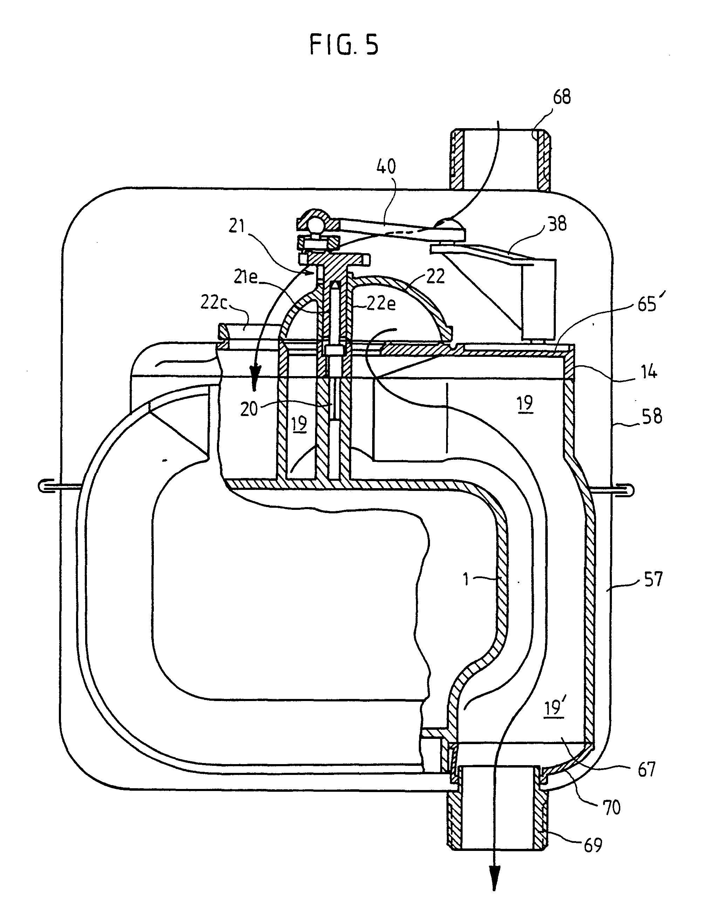

Pour réaliser le système d'introduction-évacuation de la figure 5, on ne perce pas d'orifice dans le couvercle de distribution 14, mais on supprime la cloison mince 66 pour faire communiquer les passages internes 19 et 19'. En outre, on monte sur l'enveloppe A la buse d'admission 68 qui joue le même rôle que la buse 62 de la figure 4 et la buse d'évacuation 69 disposée à la partie inférieure de l'enveloppe A. Enfin on relie par la conduite 70 la buse d'évacuation 69 et l'orifice 67.

Il ressort de la description précédente qu'en fabricant un seul type de caisse, il est possible de fournir des compteurs avec les deux systèmes d'admission-évacuation moyennant un nombre très limité d'usinages particuliers. Pour le montage de la figure 4 il suffit de percer l'orifice 65 dans la zone 65' du couvercle d'admission 14. Pour le montage de la figure 5 il suffit de supprimer la cloison mince 66 qui est facilement accessible.

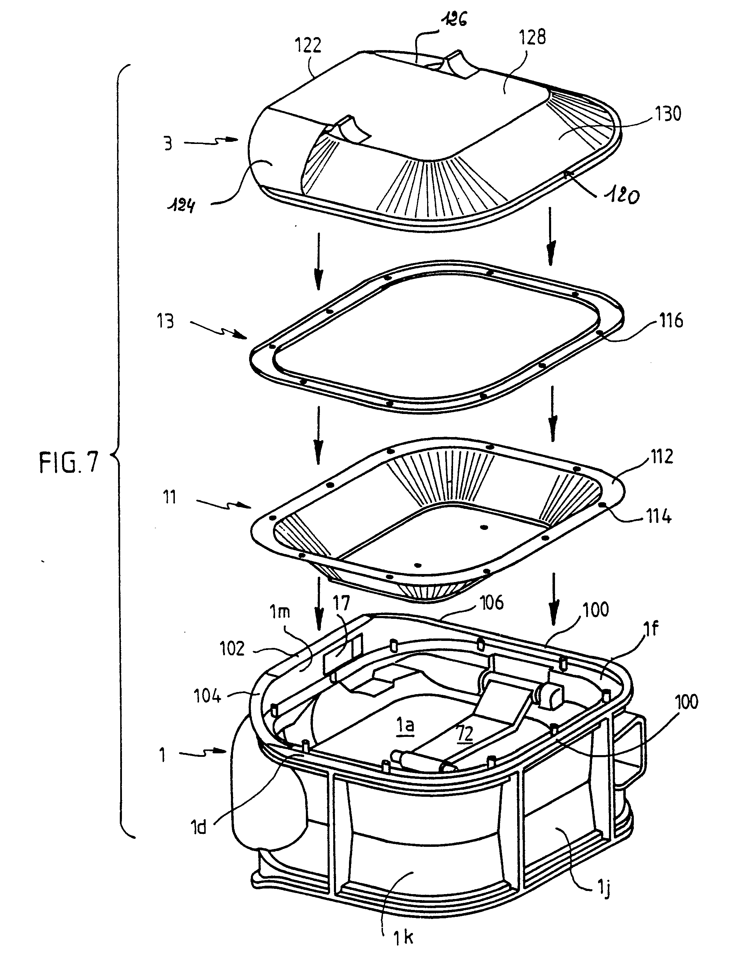

En se référant plus particulièrement aux figures 6d et 7 on va décrire plus en détail un mode préféré de montage des soufflets et des couvercles latéraux sur le bloc central 1, dans le cas où la caisse du compteur est réalisée en un matériau plastique.

La figure 6d montre que la paroi latérale 1k, 1j, 1m du bloc central 1 qui est raccordée à la cloison la, comporte deux surfaces d'accouplement 1c et 1d pour la fixation des couvercles latéraux 2 et 3. Ces surfaces d'accouplement 1c et 1d ne sont pas entièrement planes. Chaque surface comporte une portion plane 100 correspondant au fond de la caisse 1j et à la plus grande partie des faces latérales de la caisse 1k disposée

dans un plan parallèle à celui de la cloison 1a, une autre portion 102 également plane mais disposée dans un plan différent de celui de la portion 100 et parallèle à celui-ci et correspondant à la face supérieure lm sur laquelle est fixé le couvercle de distribution 14, ces deux portions planes 100 et 102 étant raccordées par deux portions incurvées 104 et 106.

Les portions incurvées 104 et 106 sont engendrées par une portion de droite qui se déplace en restant parallèle à la cloison centrale 1a et perpendiculaire à la face supérieure 1m du bloc central. Comme cela a déjà été indiqué, le bloc central définit également deux épaulements respectivement référencés 1e et 1f. Ces épaulements sont plans et disposés symétriquement par rapport à la cloison centrale la dans des plans parallèles à celle-ci. Le plan de chaque épaulement est interne par rapport au plan dans lequel se trouve la première portion plane 100 de la surface de raccordement correspondante. Chaque épaulement le, 1f comporte des tétons tels que 110 venus de moulage avec le reste du bloc central 1. Le plan de l'épaulement lf est disposé entre le passage 17 associé à la chambre 8 et l'origine du passage 18 associé à la chambre 9. On trouve une disposition semblable pour l'épaulement 1e.

La figure 7 illustre les différentes phases de la mise en place des soufflets et des couvercles latéraux. Tout d'abord l'extrémité du bras 72 est montée à pivotement sur la plaque 30 solidaire du soufflet 11. Puis on place la périphérie 112 plane du soufflet sur l'épaulement lf de telle manière que les tétons 110 pénètrent dans des trous 114 ménagés dans la périphérie 112 du soufflet. On met ensuite en place la bride 13 qui est munie d'orifices correspondants 116. La bride 13 est appliquée avec pression sur la périphérie du soufflet et on déforme par ultra-sons les têtes des tétons 110 pour réaliser ainsi une fixation étanche de la périphérie 112 du soufflet sur l'épaulement 1f.

La partie supérieure de la figure 7 montre que le couvercle latéral 3 présente une surface d'accouplement 3a qui est conjuguée de la surface d'accouplement 1d du bloc central 1. Plus précisément, la surface d'accouplement comporte une portion plan 120 correspondant à la portion 100 de la surface d'accouplement 1d, une deuxième portion plane 122 correspondant à la portion 102 et deux portions incurvées 124 et 126 correspondant aux portions 104 et 106 de la surface 1d.

Ainsi que le montre la figure 7 le couvercle latéral 3 comporte une partie plane 128 qui prolonge la portion 122 de la surface d'accouplement et une partie inclinée 130 qui raccorde la partie plane 128 à la partie 120 de la surface d'accouplement 3a, cette partie inclinée 130 étant en outre limitée par les portions incurvées 124 et 126 de la surface d'accouplement 3a.

Le couvercle latéral 3 est fixé sur le bloc central 1 par un soudage par friction. Pour cela le couvercle 3 est posé sur le bloc central 1 de telle manière que la surface d'accouplement 3a du couvercle soit au contact de la surface d'accouplement 1d du bloc central. Puis, tout en appliquant une force suffisante sur la partie 128 du couvercle 3 on soumet l'ensemble : bloc central 1, couvercle latéral 3 à un mouvement relatif de vibration selon la direction F qui est perpendiculaire à la partie supérieure lm du bloc central. cela est possible du fait de la définition donnée précédemment des deux surfaces d'accouplement. La combinaison de la force appliquée et du mouvement de vibration relatif provoque un échauffement localisé des surfaces d'accouplement et donc un soudage. Bien entendu, le couvercle 3 est réalisé en un matériau thermo-plastique identique à, ou compatible avec, celui dont est fait le bloc central. On obtient ainsi une solidarisation étanche entre le bloc central 1 et le couvercle latéral 3.

On procède d'une façon similaire pour le montage du soufflet 10 et du couvercle latéral 2 respectivement sur l'épaulement le et sur la surface d'accouplement 1c.

De préférence le matériau thermo-soudable est un polyester butylène térephtalate chargé en fibres de verre. La pression exercée perpendiculairement aux couvercles est de l'ordre de 700 daN. Les vibrations appliquées aux couvercles parallèlement aux surfaces d'accouplement ont une fréquence de l'ordre de 200 Hz et une amplitude de 0,7 à 1,5 mm.

Un tel mode de réalisation de la caisse du compteur présente de nombreux avantages par rapport aux techniques habituellement utilisées. Il faut ajouter que ce mode de réalisation de la caisse pourrait tout aussi bien s'appliquer au cas d'un compteur à quatre chambres ayant un distributeur à déplacement linéaire ou oscillant.

Du fait que la totalité des passages internes 15 à 18 reliant les chambres au couvercle de distribution 14 ainsi que le passage central 19 soient réalisés dans le bloc central 1 simplifie les problèmes d'étanchéité entre le bloc central et les couvercles latéraux. En effet, dans les constructions o* les couvercles latéraux servent à définir une partie des passages internes, ceux qui sont associés aux deux chambres externes, il faut prévoir des joints d'étanchéité particuliers pour ces passages internes.

De plus, la séparation entre la fixation des soufflets et la fixation des couvercles latéraux sur le bloc central permet de simplifier sensiblement l'assemblage du compteur et d'en permettre l'automatisation, par rapport aux techniques connues selon lesquelles la périphérie du soufflet est pincée entre un bord du bloc central et le bord d'un des couvercles latéraux. Dans ces techniques connues, il est nécessaire que le soufflet présente une surépaisseur à sa périphérie pour assurer la double étanchéité entre le soufflet, le bloc central et le couvercle latéral. Au contraire, selon l'invention, du fait que l'étanchéité doit être réalisée directement entre le bloc central et les couvercles latéraux, il est possible d'utiliser un soudage par friction ce qui serait impossible si un joint d'étanchéité devait être interposé entre ces deux pièces.

Enfin, la forme même des couvercles latéraux présente deux avantages par rapport à une solution dans laquelle des couvercles seraient plats. D'une part la présence de la portion inclinée 130 permet de rigidifier le couvercle, d'autre part cette même portion inclinée permet de diminuer l'encombrement total du compteur, notamment en autorisant l'utilisation d'une coquille inférieure 57 qui présente des congés sans en augmenter les dimensions.

**Revendications**

1. Compteur à gaz comprenant une unité de mesure comportant une caisse (D) formant deux compartiments de mesure, chaque compartiment étant séparé par un soufflet déformable en deux chambres et une surface de distribution (14b) dans laquelle sont ménagés quatre orifices (23 à 26), chaque orifice étant relié à une desdites chambres par des passages internes (15 à 18), un distributeur (22) monté à rotation sur ladite surface de distribution, et des moyens de transmission pour relier cinématiquement ledit distributeur aux dits soufflets, lesdits moyens de transmission comprenant au moins deux ensembles de leviers (37, 39 et 38, 40), lesdits moyens de transmission comprenant en outre, une pièce formant manivelle (21) comportant un moyeu (21e) monté pivotant par rapport à ladite caisse (D) et un premier axe de pivotement parallèle audit moyeu (21e), caractérisé en ce que ledit distributeur (22) comprend un fourreau cylindrique (22e) disposé perpendiculairement à ladite surface de distribution (14b) selon l'axe de rotation dudit distributeur, en ce que le moyeu (21e) de ladite manivelle (21) est engagé avec jeu dans ledit fourreau (22e), et en ce que l'axe de pivotement de ladite manivelle (21) est décalé par rapport au dit moyeu (21e), une extrémité desdits ensembles de leviers (37, 39 et 38, 40) étant montée sur ledit premier axe de pivotement, et ladite manivelle comportant en outre des moyens (21a, 22a) pour solidariser en rotation ladite pièce formant manivelle (21) et ledit distributeur (22).

2. Compteur selon la revendication 1, caractérisé en ce qu'il comprend un deuxième axe de pivotement (20) solidaire de ladite caisse (D) faisant saillie hors de ladite face de distribution (14b) et disposé selon l'axe de rotation dudit distributeur (22) et en ce que ledit moyeu (21e) est creux, ledit moyeu étant monté à pivotement sur ledit deuxième axe de pivotement.

3. Compteur selon l'une quelconque des revendications 1 et 2, caractérisé en ce que lesdits moyens de solidarisation comprennent un ergot (21a) solidaire de ladite pièce formant manivelle et une fente (22a) ménagée dans ledit distributeur dans laquelle est engagé ledit ergot.

4. Compteur selon l'une quelconque des revendications 1 à 3, caractérisé en ce que ladite face de distribution (14b) comprend une nervure circulaire d'étanchéité pour coopérer avec l'extrémité dudit fourreau (22e) la plus proche de ladite face de distribution.

5. Compteur selon l'une quelconque des revendications 1 à 4, comprenant des moyens d'affichage mécanique, caractérisé en ce que ladite pièce formant manivelle (21) comprend en outre une portion (21c) formant roue dentée de même axe que ledit moyeu et perpendiculaire à l'axe dudit moyeu (21e), ladite roue dentée (21c) entraînant ledit affichage.

6. Compteur selon la revendication 5, caractérisé en ce que ledit premier axe est solidaire de ladite portion (21c) formant roue dentée.

7. Compteur selon l'une quelconque des revendications 1 à 6, caractérisé en ce que le jeu (e) entre ledit fourreau (22e) et ledit moyeu (21e) est suffisant pour permettre, sous l'effet de la rotation de ladite pièce formant manivelle (21) un mouvement de rotation dudit distributeur (22) excentré par rapport à l'axe dudit moyeu.

8. Compteur selon l'une quelconque des revendications 1 à 7, caractérisé en ce que ladite caisse (D) forme en outre des premier (19) et deuxième (19') passages internes, ledit premier passage (19) débouchant par une extrémité dans ladite surface de distribution (14b) dans la zone balayée par ledit distributeur, ledit deuxième passage (19') présentant une extrémité débouchant par un orifice à l'extrémité de ladite caisse (D) opposée à ladite surface de distribution (14b), lesdits deux passages (19, 19') étant séparés par une cloison interne (66) perforable, ladite surface de distribution (14b) comportant une zone perforable à l'extrémité de la zone balayée par ledit distributeur (22) pour faire communiquer ledit premier passage (19) avec l'extérieur de ladite caisse.

9. Compteur à gaz selon la revendication 1, caractérisé en ce que ladite caisse (D) est formée par un bloc central (1) et par deux couvercles latéraux (2, 3) solidaires dudit bloc central (1), ledit bloc central (1) comportant tous les éléments de structure définissant lesdits passages internes (15 à 18).

10. Compteur selon la revendication 9, caractérisé en ce que ledit bloc central (1) comprend deux épaulements (1e, 1f) disposés dans des plans parallèles entre eux, et deux surfaces d'accouplement (1c, 1d), en ce que la périphérie (112) de chacun desdits soufflets (10, 11) est fixée de façon étanche sur lesdits épaulements (1e, 1f), et en ce que chaque couvercle latéral (2, 3) comporte un rebord muni d'une surface d'accouplement (2a, 3a), les couvercles latéraux (2, 3) étant directement fixé audit bloc central (1) par les surfaces d'accouplement (2a, 3a, 1c, 1d).

11. Compteur selon la revendication 10, caractérisé en ce que ledit bloc central (1) et lesdits couvercles latéraux (2, 3) sont réalisés en un matériau thermo-soudable et sont solidarisés entre eux par soudage par friction.

**Claims**

1. A gas meter comprising a measuring unit which includes a case (D) forming two measurement compartments, each compartment being separated into two chambers by a deformable bellow, and a distribution surface (14b) in which four orifices (23 to 26) are formed, each orifice being connected to one of said chambers by internal passages (15 to 18), a distributor (22) rotatably mounted on said distribution surface, and transmission means for linking kinematically the movement of said distributor to that of said bellows, said transmission means comprising at least two lever assemblies (37, 39 and 38, 40), said transmission means also comprising a part forming a crank (21) including a hub (21e) pivotally mounted with respect to said case (D) and a first pivot shaft parallel to said hub (21e), characterized in that said distributor (22) includes a cylindrical sleeve (22e) disposed perpendicular to said distribution surface (14b) along the axis of rotation of said distributor, in that the hub (21e) of said crank (21) is engaged with clearance in said sleeve (22e), and in that the pivot shaft of said crank (21) is offset relative to said hub (21e), one end of each of said lever assemblies (37, 39 and 38, 40) being mounted on said first pivot shaft, and said crank also including means (21a, 22a) for securing said part forming a crank (21) and said distributor (22) for rotation together.

2. A meter according to claim 1, characterized in that it includes a second pivot shaft (20) integral with said case (D), projecting outside of said distribution face (14b) and arranged along the axis of rotation of said distributor (22), and in that said hub (21e) is hollow, said hub being pivotally mounted on said second pivot shaft.

3. A meter according to claim 1 or 2, characterized in that said securing means includes a lug (21a) integral with said crank part and a slot (22a) provided in said distributor and in which is engaged said lug.

4. A meter according to any one of claims 1 to 3, characterized in that said distribution surface (14b) includes a circular sealing rib cooperating with the end of said sleeve (22e) closest to said distribution face.

5. A meter according to any one of claims 1 to 4, including mechanical display means, characterized in that said crank part (21) also includes a toothed wheel portion (21c) having the same axis as said hub and perpendicular to the axis of said hub (21e), said toothed wheel (21c) driving said display means.

6. A meter according to claim 5, characterized in that said first shaft is integral with said toothed wheel portion (21c).

7. A meter according to any one of claims 1 to 6, characterized in that the clearance (e) between said sleeve and said hub (21e) is sufficient to allow, under the effect of the rotation of said crank part (21), a rotational movement of said distributor (22) off-centered with respect to the axis of said hub.

8. A meter according to any one of claims 1 to 7, characterized in that said case (D) also forms first (19) and second (19') internal passages, said first passage (19) leading out through one end in said distribution surface (14b) into the zone swept by said distributor, said second passage (19') having one end leading out through an orifice at the end of said case (D) opposite to said distribution surface (14b), said two passages (19, 19') being separated by a perforable internal partition (66), said distribution surface (14b) including a perforable zone at the end of the zone swept by said distributor (22) to allow said first passage (19) to communicate with the exterior of said case.

9. A gas meter according to claim 1, characterized in that said case (D) is formed by a central block (1) and two side covers (2, 3) secured to said central block (10), said central block (1) including all the structural elements which define said internal passages (15 to 18).

10. A meter according to claim 9, characterized in that said central block (1) includes two shoulders (1e, 1f) placed in parallel planes and two coupling surfaces (1c, 1d), in that the periphery (112) of each of said diaphragms (10, 11) is fixed in a sealed manner on said shoulders (1e, 1f), and in that each side cover (2, 3) includes an edge equipped with a coupling surface (2a, 3a), the side covers (2, 3) being directly fixed to the central block (1) through the coupling surfaces (2a, 3a, 1c, 1d).

11. A meter according to claim 10, characterized in that said central block (1) and said side covers (2, 3) are made of heat-weldable material and are assembled together by friction welding.

**Patentansprüche**

1. Gaszähler, der eine Meßeinheit beinhaltet, die einen Kasten (D) enthält, der zwei Meßabteile bildet, von denen jedes Abteil durch einen verformbaren Balg in zwei Kammern geteilt ist, eine Verteilfläche (14b), in der vier Öffnungen (23 bis 26) angebracht sind, wobei jede Öffnung mit einer der besagten Kammern durch interne Durchlässe (15 bis 18) verbunden ist, einen Verteiler (22), der drehbar auf dieser Verteilfläche gelagert ist, und Übertragungsmittel enthält, um kinematisch den besagten Verteiler mit den genannten Bälgen zu verbinden, wobei die besagten Transmissionsmittel wenigstens zwei Anordnungen von Hebeln (37, 39 und 38, 40) enthalten, wobei die besagten Transmissionsmittel ferner ein Teil, das eine Kurbel (21) bildet, eine Nabe (21e), die schwenkbar in bezug auf besagten Kasten (D) montiert ist, und eine erste Schwenkachse parallel zur besagten Nabe (21e) enthalten, dadurch gekennzeichnet, daß der besagte Verteiler (22) eine zylindrische Hülse (22e) enthält, die senkrecht zur besagten Verteilfläche (14b) entlang der Rotationsachse besagten Verteilers angeordnet ist, und daß die Nabe (21e) besagter Kurbel (21) mit Spiel in die besagte Nabe (22e) eigepaßt ist, und daß die Schwenkachse besagter Kurbel (21) in bezug auf genannte Nabe (21e) versetzt ist, wobei ein Ende besagter Anordnungen von Hebeln (37, 39 und 38, 40) auf dieser ersten Schwenkachse montiert ist und besagte Kurbel unter anderem die Mittel (21a, 22a) enthält, um das besagte Teil, das die Kurbel bilded, und den besagten Verteiler (22) drehfest zu verbinden.

2. Zähler gemäß Patentanspruch 1, dadurch gekennzeichnet, daß er eine zweite Schwenkachse (20) enthält, der fest mit besagtem Kasten (D) verbunden und einen Vorsprung außerhalb besagter Verteilvorderseite (14b) bilded sowie entlang der Rotationsachse des Verteilers (22) angeordnet ist, und die besagte Nabe (21e) hohl ist, wobei besagte nabe schwenkbar auf der zweiten Schwenkachse gelagert ist.

3. Zähler gemäß einem der Patentansprüche 1 und 2, dadurch gekennzeichnet, daß die besagten Mittel zur festen Verbindung einen Vorsprung (21a) aus einem Stück mit besagtem Teil, das eine Kurbel bildet, und einem Schiltz (22a) enthalten, der in dem besagten Verteiler angebracht ist und in den dieser Vorsprung eingreift.

4. Zähler gemäß einem der Patentansprüche 1 bis 3, dadurch gekennzeichnet, daß die besagte Verteilvorderseite (14b) eine kreisförmige Dichtungsrippe enthält, um mit demjenigen Ende besagter Hülse (22e) zusammenzuarbeiten, das der Verteilvorderseite am nächsten liegt.

5. Zähler gemäß irgendeinem der Patentansprüche 1 bis 4, der mechanische Anzeigemittel enthält, dadurch gekennzeichnet, daß besagtes Teil, das eine Kurbel (21) bildet, ferner einen Teil (21c) enthält, der ein Zahnrad mit der gleichen Achse wie die Nabe bildet und senkrecht zur Achse der Nabe (21e) steht, wobei dieses Zahnrad (21c) die besagte Anzeige antreibt.

6. Zähler gemäß Patentanspruch 5, dadurch gekennzeichnet, daß die besagte erste Achse aus einem Stück mit dem besagten Teil (21c) ist, der ein Zahnrad bildet.

7. Zähler gemäß einem der Patentansprüche 1 bis 6, dadurch gekennzeichnet, daß das Spiel (e) zwischen der besagten Hülse (22e) und der besagten Nabe (21e) ausreichend ist, um unter dem Einfluß der Rotation des besagten Teiles, das eine Kurbel (21) bildet, eine Rotationsbewegung des besagten Verteilers (22) exzentrisch in bezug auf die Achse besagter Nabe zu ermöglichen.

8. Zähler gemäß einem der Patentansprüche 1 bis 7, dadurch gekennzeichnet, daß der besagte Kasten (D) ferner den ersten (19) und zweiten (19′) internen Durchlaß bildet, wobei der erste besagte Durchlaß über ein Ende in besagter Verteilvorderseite (14b) in dem von dem Verteiler überstrichenen Bereich ausmündet, wobei der zweite Durchlaß (19′) ein Ende aufweist, das in eine Öffnung an dem besagten Ende des besagten Kastens (D) gegenüber besagter Verteilvorderseite (14b) ausmündet, wobei die zwei Durchlässe (19, 19′) durch eine interne durchdringbare Scheidewand (66) getrennt sind, wobei besagte Verteilfläche (14b) einen durchdringbaren Bereich am Ende der durch den Verteiler (22) überstrichenen Bereiches enthält, um den besagten ersten Durchlaß (19) mit dem Äußeren des besagten Kastens kommunizieren zu lassen.

9. Gaszähler gemäß Patentanspruch 1, dadurch gekennzeichnet, dam der besagte Kasten (D) von einem zentralen Block (1) und von zwei fest mit dem Zentralblock (1) verbundenen lateralen Deckeln (2, 3) gebildet ist, wobei der besagte Zentralblock (1) alle Strukturelemente enthält, die die besagten inneren Durchlässe (15 bis 18) definieren.

10. Zähler gemäß Patentanspruch 9, dadurch gekennzeichnet, daß der besagte Zentralblock (1) zwei Vorsprünge (1e, 1f), die in zueinander parallelen Ebenen angeordnet sind, und zwei Kupplungsflächen (1c, 1d) enthält, daß die Umrandung (112) jedes der besagteh Gaszählerbalgen (10, 11) dichtschließend auf besagten Vorsprüngen (1e, 1f) befestigt ist und daß jeder laterale Deckel (2, 3) einen Rand enthält, der mit einer Kupplungsfläche (2a, 3a) ausgestattet ist, wobei die lateralen Deckel (2, 3) direkt auf besagten Zentralblock (1) an den Kupplungsflachen (2a, 3a, 1c, 1d) befestigt sind.

11. Zähler gemäß Patentanspruch 10, dadurch gekennzeichnet, daß der besagte Zentralblock (1) und die besagten lateralen Deckel (2, 3) aus einem thermoschweißbaren Material gefertigt sind und unter sich durch Friktionsschweißung verbunden sind.

FIG.1

# FIG. 2

2

# FIG.3a

FIG. 3 b

EP 0 128 838 B1

# FIG. 4

## FIG. 5

# FIG. 6a

FIG.6b

FIG. 6c

EP 0 128 838 B1

FIG. 6d

FIG. 6e

FIG.7